Europäisches Patentamt

**European Patent Office**

**Office européen des brevets**

(11) Publication number: **0 086 299**
A2

# EUROPEAN PATENT APPLICATION

(21) Application number: **82305041.4**

(22) Date of filing: **23.09.82**

(51) Int. Cl.³: **B 60 K 17/24**

(30) Priority: **11.02.82 GB 8203950**

(43) Date of publication of application: **24.08.83**
**Bulletin 83/34**

(84) Designated Contracting States: **AT BE CH DE FR GB IT LI LU NL SE**

(71) Applicant: **Quest 80 Limited, 17 Hollow Street Great Somerford, Chippenham Wiltshire (GB)**

(72) Inventor: **Knowles, Richard Thomas, Field Barn Cottage Shooter's Hill Stow Road, Cirencester Gloucester (GB)**

(74) Representative: **Townsend, Derek Thomas et al, c/o Barlin Professional Services Barlin House 20 High Street, Carshalton Surrey SM5 3AG (GB)**

(54) **Improvements in or relating to vehicle transmission systems.**

(57) This invention is concerned with a vehicle transmission system for providing a driving connection between the vehicle drive means and the vehicle frame and comprises a transmission bush coupling one part of which is clamped to the vehicle main frame and the other part of which is clamped to the sub frame secured to the vehicle driving axle and which coupling includes a flexible part spherical diaphragm clamped between supporting face parts which closely engage the diaphragm on the respective opposite sides. The sub frame comprises a pair of arms which diverge away from each other and are secured to opposite sides of the vehicle driving axle. The flexible coupling is located at the apex of the diverging arms.

## IMPROVEMENTS IN OR RELATING TO VEHICLE
## TRANSMISSION SYSTEMS

This invention has reference to vehicle transmission systems.

Vehicles, for example lorries and coaches, are driven by transmission systems which include a gear box which is connected to the driving wheels by a transmission shaft and a differential mechanism. In such a system the vehicle main frame is supported on the driving wheels by leaf springs and these leaf springs serve not only to support the vehicle frame but also act to transmit the drive from the driving wheels to the main frame of the vehicle both while the vehicle is being driven from the vehicle engine and while the brakes are being applied to cause the vehicle to decelerate.

It has been proposed in US Specification No. 4213512 to provide a support bearing for a vehicle drive shaft formed of two annuli having a curved outer bearing surface with a surrounding housing but this bearing is not capable of assisting in propelling the vehicle.

It is an object of the present invention to provide an improved vehicle transmission system.

It is a further object of the present invention to provide an improved vehicle transmission system in which the transmission is able not only to accommodate changes in the transmission system as the vehicle traverses uneven surfaces but also provides an effective driving connection between the engine and the vehicle main frame.

According to the present invention a vehicle transmission system for providing a driving connection between the vehicle drive means and the vehicle frame comprises a transmission bush coupling one part of which is clamped to the vehicle main frame and the other part of which is clamped to a sub frame secured to the vehicle driving axle, and which coupling includes a flexible part spherical diaphragm clamped between supporting face parts which closely engage the diaphragm on the respective opposite sides.

Preferably the apex of the A-shaped frame with diverging arms is secured to the outer casing part of the transmission coupling means. A vehicle transmission system in accordance with the present invention will now be described by way of example with reference to the accompanying drawings wherein:-

Figure 1 is a diagrammatic side view representation of a transmission system for a vehicle

Figure 2 is a side view of part of the transmission system to a larger scale than Figure 1.

Figure 3 is a plan view of part of the transmission system, and

Figure 4 is a sectional plan view corresponding to part of Fig. 2.

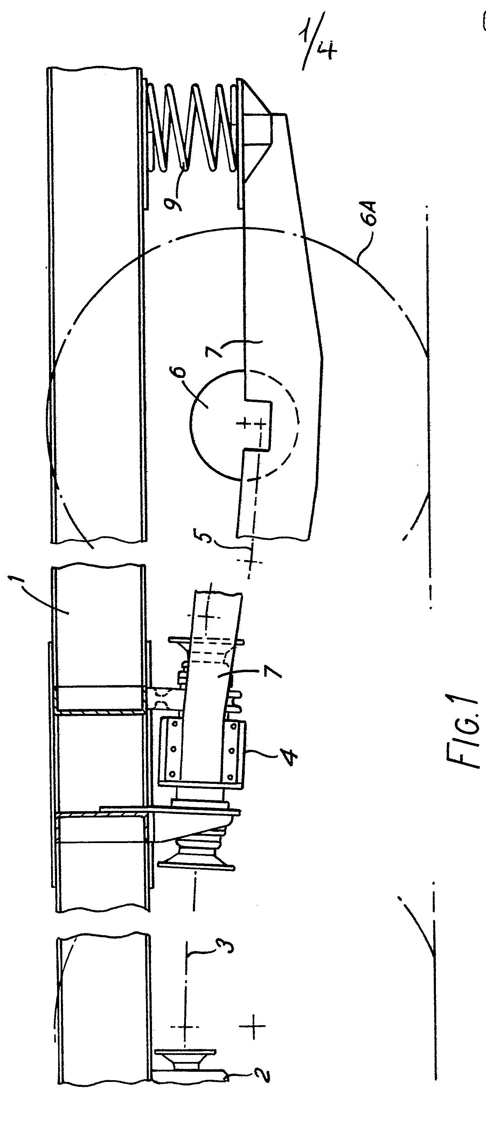

As shown in Fig. 1 a vehicle main frame 1 supports a vehicle drive means (not shown) usually a petrol driven engine connected to a gear box illustrated diagrammatically at 2 (Fig. 1) which is connected through a drive shaft 3 to a transmission coupling means 4 and through a further drive shaft 5 and a differential mechanism 6 to the drive wheels 6A of the vehicle. An A-shaped subsidiary support frame 7 having a pair of diverging arms with the respective arms attached to the driving axle at opposite sides of the axle and which axle supports the differential mechanism 6 and the drive wheels 6A. The transmission coupling means 4 is positioned at the apex of the respective arms of the A-shaped frame. Further wheels 8 (as shown non driving wheels) also support the vehicle. A coil spring means 9 (Fig. 1) provides a suspension mechanism between the A-shaped frame and the main frame.

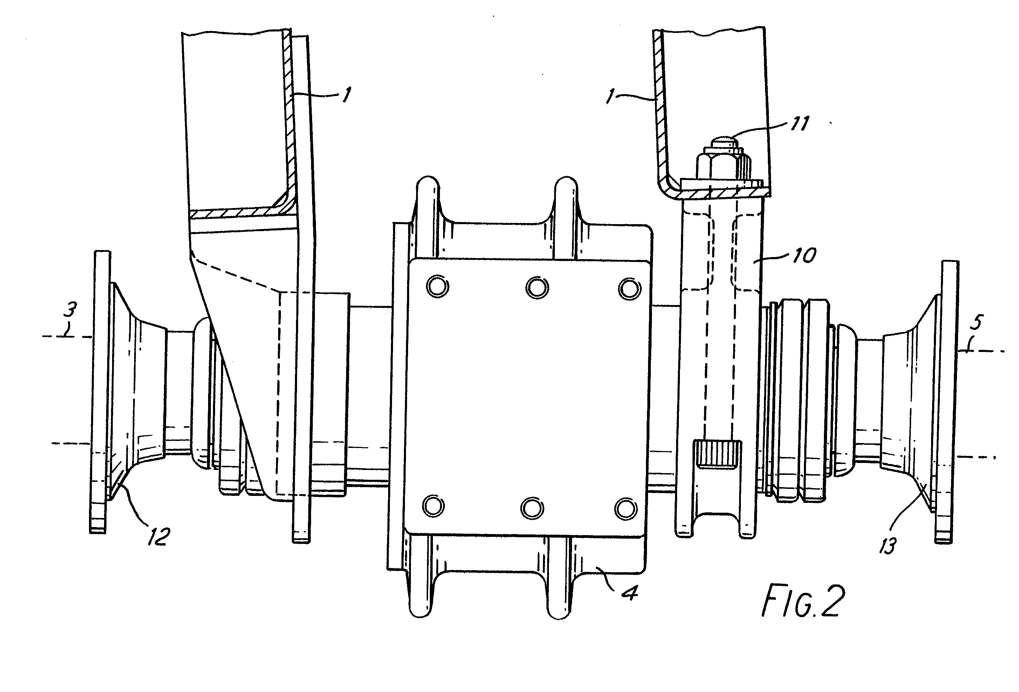

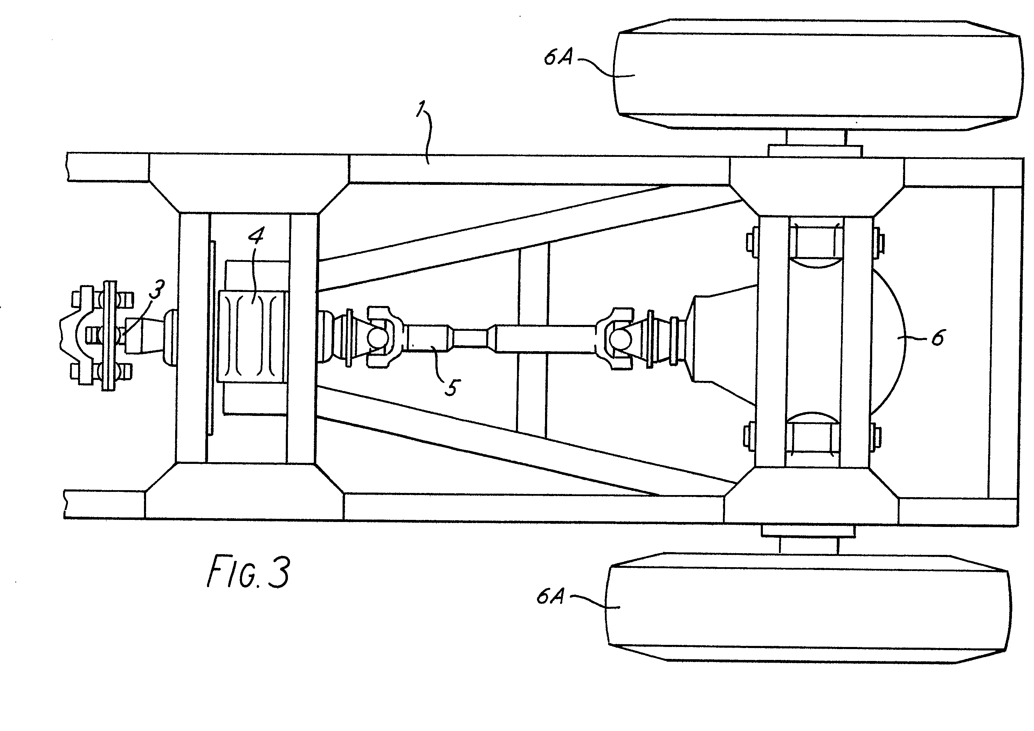

As shown in Fig. 2 the outer casing part of the transmission coupling means 4 is clamped to the main frame 1 by clamping means 10 including bolts 11. The drive shaft 3 from the gear box 2 is connected by a spline 12 to the coupling means 4 and the coupling means 4 is connected by another spline 13 to a drive shaft to the drive shaft 6 and including a differential mechanism 6A. The other part of the coupling means 4 is secured to the A-shaped frame 7 by bolts 14. As best shown in Fig. 3 each of the diverging arms 7 of the A-shaped frame extend from the apex of the A-shaped frame where the transmission coupling means 4 is positioned to the driving axle where the respective arms are secured to the driving axle on opposite sides of the central differential mechanism 6 and at the same distance

0086299

from the differential mechanism.

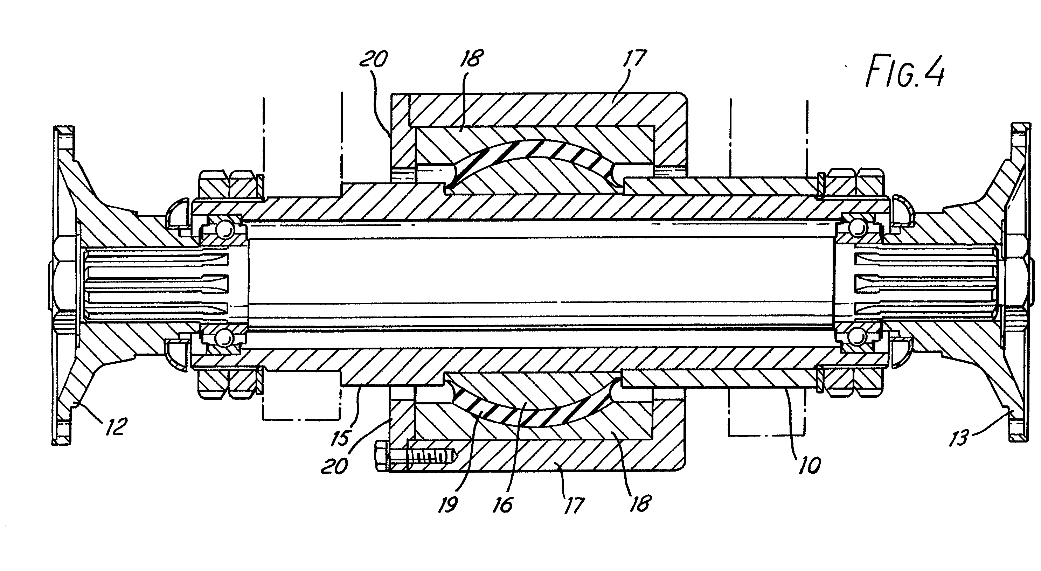

As shown in Fig. 4 the spline 12 connected to the gear box is connected to a hollow shaft 15 and this hollow shaft 15 is solidly secured to the main frame of the vehicle by the clamping means 10. Solidly mounted on the hollow shaft is one inner member 16 of the transmission coupling means 4 which inner member has an outer contour of part spherical shape and solidly mounted on a surrounding casing 17 (which is clamped to the A-shaped frame) is the other outer member 18 of the transmission coupling means 4 which other outer member has an inner contour of part spherical shape. A flexible elastic intermediate bush diaphragm connection 19 which has an outer part spherical contour to correspond with the inner contour of the other member 18 and has an inner part spherical contour to correspond with the outer contour of the one member 16 of the transmission coupling means. The one inner member 16 and the other outer member 18 are of hard-wearing metal material and the intermediate connection 19 is of hard wearing rubber or elastomeric synthetic material. The intermediate part spherical connection typically has a wall thickness of the order of $\frac{1}{2}$ inch and is sufficiently elastic to compensate for movement between the A-shaped frame and the main frame as the vehicle moves over rough territory.

The elastomeric member 19 is split into three segment sections divided around the periphery of the member 16 to facilitate assembly and the outer member 18, intermediate connection 19 and the one inner member are clamped within the surrounding casing by a clamp plate 20.

When a vehicle as described is being driven the drive is transmitted from the engine or other drive means to the gear box 2 by a drive shaft and through the transmission coupling means 4 and a further drive shaft to the differential means and to the drive wheels. The drive is also transmitted from the drive wheels to the axle and to the A-shaped frame to the transmission coupling means and thence to the main frame. The transmission coupling means absorbs loads transmitted from the axle to the main frame and absorbs loads transmitted from the axle and dampens axle roll and absorbs traction forces. Thus the axle propels the vehicle through thrust applied through the transmission couplings centre casing through the elastomeric member 19 to the inner casing to the vehicle main frame. By this means the load is absorbed at the centre of the vehicle allowing a light frame to be used. As the vehicle travels over uneven ground changes in the relative position of the vehicle main frame and the A-shaped frame are partly accommodated for by the spring 9 and changes in the transmission are accommodated for by movement between the outer and inner transmission coupling means 16 and 18 with the intermediate diaphragm connection 19. By virtue of the part spherical shape of the parts changes are readily accommodated. Also the transmission coupling means 4 serves as a flexible driving connection between the driving road wheels of the vehicle and the vehicle frame.

Although the invention has been described by way of example to applying a driving connection between the drive means and the rear driving axle to the frame it may be applied between the drive means and the front driving axle to the main frame.

0086299

CLAIMS:

1.  A vehicle transmission system for providing a driving connection between the vehicle drive means and the vehicle frame wherein a sub frame is secured to the vehicle driving axle characterised in that the drive connection includes a transmission bush coupling (19) one part of which is clamped to the vehicle frame (1) and the other part of which is clamped to the sub frame (7) and in that the transmission bush coupling includes a flexible part-spherical diaphragm clamped (19) between supporting face parts (16,18) which closely engage the diaphragm on the respective opposite sides.

2.  A vehicle transmission system according to Claim 1 characterised in that the sub frame (7) secured to the vehicle driving axle (3) comprises a pair of arms which diverge away from each other and are each secured to opposite sides of the vehicle driving axle and wherein the flexible coupling is located at the apex of the diverging arms.

3.  A vehicle transmission system according to Claim 1 or 2 characterised in that the flexible coupling (19) supports the vehicle drive shaft (3) from the vehicle drive means to the driving axle.

4.  A vehicle transmission system according to any of the preceding Claims characterised in that the flexible diaphragm (19) is of elastomeric material and bonded to the spherical outer face of the inner member and bonded to the inner spherical face of the outer member.

5.  A vehicle transmission system according to Claim 4 characterised in that the flexible diaphragm is formed
in three sectors clamped between clamp plates at
opposite ends of the supporting faces.

6.   A vehicle transmission system according to Claim 4
characterised in that the flexible diaphragm is composed
of rubber.

FIG.1

1/4

0086299

0086299

FIG.2

FIG.3

FIG.4

20  18  17

12

15

20

19  16  17  18

10

13

4/4

0086299